# EUROPÄISCHE PATENTSCHRIFT

(11) **EP 1 944 212 B1**
(45) Veröffentlichungstag und Bekanntmachung des Hinweises auf die Patenterteilung: **10.03.2010**
(21) Anmeldenummer: 07123252.4
(22) Anmeldetag: 14.12.2007
(51) Int. Cl.: B60W 30/08, B60Q 1/52, G01S 13/93, G08G 1/16

(54) **Verfahren und Vorrichtung zum Ermitteln potentiell gefährdender Objekte für ein Fahrzeug**
Method and device for recognising potentially dangerous objects for a vehicle
Procédé et dispositif destinés à la identification d'objets potentiellement dangereux pour un véhicule

(30) Priorität: 10.01.2007 DE 102007001552
(43) Veröffentlichungstag der Anmeldung: 16.07.2008
(73) Patentinhaber: ROBERT BOSCH GMBH, 70442 Stuttgart (DE)
(72) Erfinder: Wuerz-Wessel, Alexander, 70599, Stuttgart (DE); Schick, Jens, 71083, Herrenberg (DE)

(56) Entgegenhaltungen:
- EP-A1- 1 696 669
- WO-A-03/006291
- WO-A-2005/004461
- WO-A-2005/054008
- DE-A1- 10 359 413
- JP-A- 9 226 490
- JP-A- 2006 252 389
- US-A1- 2006 282 218

## Beschreibung

### STAND DER TECHNIK

Die vorliegende Erfindung betrifft ein Verfahren zum Ermitteln potentiell gefährdender Objekte für ein Fahrzeug, insbesondere einem Kraftfahrzeug im Straßenverkehr. Zudem betrifft die vorliegende Erfindung eine Vorrichtung zum Durchführen des erfindungsgemäßen Verfahrens.

Fahrerassistenzsysteme unterstützen einen Fahrer eines Kraftfahrzeuges in unübersichtlichen oder potentiell gefährlichen Situationen. Eine zuverlässige Sensorik und eine zuverlässige Einschätzung der Verkehrsituation durch das Fahrerassistenzsystem sind unabdingbar, um den Fahrer der Verkehrsituation angepasst auf mögliche Gefahrenquellen hinzuweisen ohne den Fahrer mit unnötigen Wamhinweisen abzulenken.

Das Dokument EP 1696669 A1, das den Oberbegriff des Anspruch 1 bildet, beschäftigt sich mit verschiedenen Kameraanordnungen sowohl aus dem Stand der Technik, wie auch einer erfindungsgemäßen, welche sich dadurch auszeichnet, das 2 Kameras am Fahrzeug auf einer Seite hintereinander angebracht sind. Im weiteren werden dann deren Sichtbereiche überlappt und Grenzlinien erkannt. Außerdem wird eine Objekterkennung durchgeführt, die einer Kollisionsgefahrbestimmung dient.

Das Dokument DE 103 59 413 A1 beschäftigt sich mit der Darstellung ausgewählter Objekte in einem Head-up Display aufgrund der ermittelten Bewegungsdaten von Objekten. Im Speziellen werden die Aktionsbereiche dieser Objekte dargestellt.

### OFFENBARUNG DER ERFINDUNG

Das erfindungsgemäße Verfahren mit den Merkmalen des Anspruchs 1 schafft eine robuste Erkennung potentiell gefährdender Objekte mit geringem sensorischen Aufwand.

Ein Bild bezeichnet in dem Kontext der vorliegenden Erfindung eine zweidimensionale Projektion der Umgebung, wie sie sich zum Beispiel durch eine Fotographie mit einer Kamera ergibt. Die Erfassung des Bildes kann nebst einer Kamera auch durch andere Sensorelemente, z.B. Abstandradars, erfolgen. Die beiden Richtungen in dem Bild werden als horizontal und vertikal unterschieden. Das Bild kann sämtliche Informationen einer Photographie, eines Radarbildes etc. beinhalten. Es ist jedoch auch ferner möglich, das Bild auf wesentliche Kernmerkmale zu reduzieren. Hierzu können mittels geeigneter Mustererkennungsverfahren und Mustererkennungseinrichtungen Objekte erkannt werden. In dem Bild erfolgt die Darstellung der Objekte dann zweckmäßigerweise durch die Abmessungen der Objekte und gegebenenfalls eindeutige Symbole. Eine Identifizierung der Objekte als Objekttypen wie Fußgänger, Radfahrer, Kraftfahrzeug, Baum, Seitenstreifen, Begrenzungsposten, Spurbegrenzung, etc. kann optional erfolgen, ist aber nicht notwendig.

Die Bewegung der Objekte wird durch Vergleich in zeitlicher Abfolge aufgenommener Bilder ermittelt. Die Objekte können unter Anderem allein daran erkannt werden, dass sich ihre Position im Bild ändert. Die bestimmte Bewegungsrichtung gibt an, wie sich das Objekt in dem Bild bewegt. Eine Ermittelung der Bewegungsrichtung in der Umgebung, also eine dreidimensionale Bewegungsrichtung, erfolgt nicht.

Der reale Bewegungskorridor bezeichnet den Raum, welchen das Fahrzeug in Zukunft durchfahren wird. Aus ermittelten Fahrzeugdaten kann zumindest für eine kurze Zeitspanne weniger Sekunden der Bewegungskorridor zuverlässig geschätzt werden.

Der geschätzte Bewegungskorridor wird mit dem Bild überlagert. Hierzu ist eine Transformation des im Prinzip dreidimensionalen geschätzten Bewegungskorridors in das Bild notwendig. Dies entspricht einer zweidimensionale Projektion des Bewegungskorridors, gleich der mit der das Bild aufgenommen wird. Bei Kenntnis der Darstellungseigenschaften der Bild-gebenden Elemente wird die zugrunde liegende zweidimensionale Projektion bestimmt und auf den geschätzten Bewegungskorridor angewandt.

Der Bewegungskorridor wie auch dessen Überlagerung in dem Bild weist zwei Seitenränder auf. Die Seitenränder verlaufen längs zur Fahrtrichtung des Fahrzeuges. Sie werden im Wesentlichen durch die Breite des Fahrzeuges festgelegt. Ein Objekt wird als potentiell gefährdend eingestuft, wenn sich das Objekt in dem Bewegungskorridor befindet oder auf den Bewegungskorridor zubewegt. Dies wird in der Überlagerung des Bildes und des geschätzten Bewegungskorridors dadurch erkannt, dass sich das Objekt in eine Richtung bewegt, in welcher es auf einen bzw. zwei Seitenränder trifft.

Ausgestaltungen und bevorzugte Ausführungsformen sind in den Unteransprüchen angegeben.

Die Seitenränder des Bewegungskorridors können basierend auf der Breite des Fahrzeuges geschätzt werden.

Der Bewegungskorridor kann basierend auf der Geschwindigkeit des Fahrzeuges und/oder einer erfassten Lenkstellung geschätzt wird.

Einem Objekt, das als potentiell gefährdend ermittelt wird, kann ein Gefährdungspotential zugeordnet werden. Eine quantitative Angabe der Gefährdung ermöglicht insbesondere bei mehreren gefährdenden Objekten eine gezielte Warnung hinsichtlich besonders relevanter Objekte.

Eine Ausgestaltung sieht vor, dass die vertikale Abmessung des Objekts in dem Bild bestimmt wird und das Gefährdungspotential in Abhängigkeit der bestimmten vertikalen Abmessung erhöht wird. In dem Bild groß erscheinende Objekte sind dem Fahrzeug wahrscheinlich näher als klein erscheinende.

Eine Ausgestaltung sieht vor, dass die vertikale Position des Objekts in aufeinanderfolgenden Bildern bestimmt wird und das Gefährdungspotential des Objekts bei gleichbleibender vertikaler Position erniedrigt wird oder erniedrigt wird, wenn sich ein von dem unteren Rand des Bildes bemessener vertikaler Abstand zu der vertikalen Position vergrößert. Ein solches Objekt bewegt sich synchron zu dem Fahrzeug, z.B. ein vorausfahrendes Fahrzeug, oder von dem Fahrzeug weg. Eine Gefährdung durch ein solches Objekt ist auch dann als gering einzustufen, wenn sich das Objekt in dem Bewegungskorridor befindet.

Eine Ausgestaltung sieht vor, dass bestimmt wird, ob das in dem Bild bewegte Objekt eine Eigenbewegung oder ein in der Welt statisches Objekt ist, und das Gefährdungspotential für ein Objekt mit Eigenbewegung größer als für ein in der Welt statisches Objekt gewählt wird.

Das summierte Gefährdungspotential jedes Streifens kann durch eine Signalisierungseinrichtung dem Fahrer des Fahrzeuges signalisiert werden.

### KURZE BESCHREIBUNG DER ZEICHNUNGEN

Die vorliegende Erfindung wird nachfolgend anhand bevorzugter Ausführungsformen und beigefügten Figuren erläutert. In den Figuren zeigen:
- Fig. 1: eine schematische Darstellung einer Verkehrsituation;
- Fig. 2: ein erstes aufgenommenes Bild zur Erläuterung einer Ausführungsform;
- Fig. 3: ein zweites aufgenommenes Bild zur Erläuterung der Ausführungsform;
- Fig. 4: ein drittes aufgenommenes Bild zur Erläuterung der Ausführungsform; und
- Fig. 5: ein horizontal aufgelöstes Gefährdungspotential zu dem Bild von Fig. 4.

### AUSFÜHRUNGSFORMEN DER ERFINDUNG

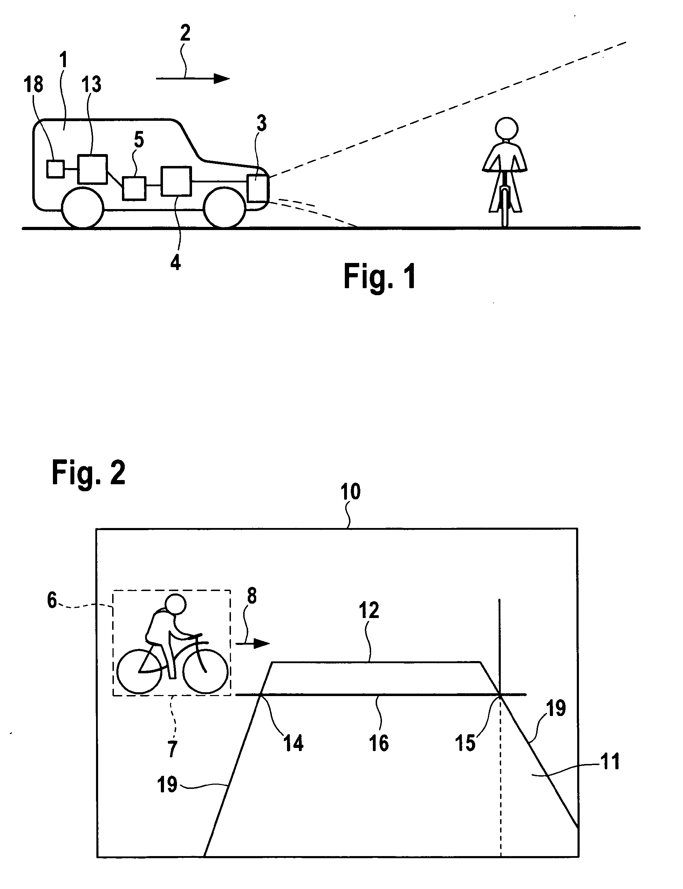

Eine bevorzugte Ausführungsform eines Systems zum Einschätzen der Gefährdung wird nachfolgend in Zusammenhang mit den Figuren 1 bis 5 erläutert. In Figur 1 zeigt eine schematische Skizze einer beispielhaften Verkehrssituation, in welcher die Ausführungsform Anwendung finden kann. Ein Kraftfahrzeug 1, z.B. ein PKW, bewegt sich auf einer Straße mit einer bekannten Geschwindigkeit v in eine Richtung 2. Ein Radfahrer oder sonstiger Verkehrsteilnehmer kreuzt den Weg des PKWs 1.

Der PKW 1 weist eine Kamera 3 auf, die zumindest in Fahrtrichtung 2 die Verkehrsituation in einzelnen Bildern erfasst. Anstelle einer Kamera 3 können auch andere orts- oder winkelauflösende Sensoren verwendet werden, z.B. Lidar, Radar, PMD (photonic mixing device), Ultraschallsensoranordnungen. Nachfolgend wird die Ausführungsform nur beispielhaft unter Verwendung einer Kamera 3 für alle Sensoren beschrieben.

Der Kamera 3 ist vorzugsweise eine Mustererkennungseinrichtung 4 nachgeschaltet. Die Mustererkennungseinrichtung 4 kann den Informationsgehalt des Bildes abstrahieren, z.B. erkennt einen Fußgänger, einen PKW, einen Baum etc. Mit der gewonnen Abstraktion können die zu verarbeitenden Bilddaten reduziert werden. Eine solche Reduktion ist für die Ausführungsform jedoch rein optional.

Eine Bewegungsschätzungseinrichtung 5 ermittelt aus dem Bild oder dem abstrahierten Bild Objekte, die bewegen. Gegebenenfalls unterscheidet die Bewegungsschätzungseinrichtungen 5 nach Objekten, die eine Eigenbewegung aufweisen und Objekten, die aufgrund der Bewegung des Fahrzeuges als bewegt erscheinen.

Ein einzelnes von der Kamera 3 aufgenommenes Bild 10 ist schematisch in Figur 2 angedeutet. Der Radfahrer ist von der Bewegungsschätzungseinrichtung 5 als bewegtes Objekt erkannt. Der angedeutete Rahmen 6 um die Bildpunkte, die den Radfahrer abbilden, umfasst die Bildpunkte, die die Bewegungsschätzungseinrichtung 5 dem Radfahrer zuordnet. In der nachfolgend beschriebenen Ausführungsform ist insbesondere die Kante 7 des Rahmens 6 von Bedeutung.

Neben der Zuordnung einzelner Bildpunkte zu einem bewegten Objekt ermittelt die Bewegungsschätzungseinrichtung 5 auch die Bewegungsrichtung 8 jedes bewegten Objekts. Ein einfaches und robustes Verfahren berücksichtigt nur die Bewegung des Objekts in horizontaler Richtung, in dem Bild von links nach rechts und vice versa.

In das Bild 10 oder das abstrahierte Bild ist ein Bewegungskorridor 11 durch des Fahrzeuges 1 eine Überlagerungseinrichtung 18 eingeblendet oder diesem überlagert. Der Bewegungskorridor 11 gibt den Weg an, den das Fahrzeug - vermutlich - in der Zukunft fahren wird. Der Bewegungskorridor ist seitlich durch die Breite des Fahrzeuges 1 vorgegeben. Der Wegverlauf wird zumindest für die nächste Zukunft, d.h. für wenige Sekunden, z.B. 2,5 s, anhand des momentanen Lenkwinkels geschätzt. Die Überlagerung des Bewegungskorridors 11 in das Bild 10 erfolgt unter Berücksichtigung der Perspektive der Kamera. Der Bewegungskorridor 11 kann wie in Figur 2 angedeutet für eine vorbestimmte Zeitspanne von wenigen Sekunden geschätzt werden. Entsprechend ergibt sich die obere Kante 12 des Bewegungskorridors 11.

Eine Auswertungseinrichtung 13 bestimmt anhand des mit dem Bewegungskorridor 11 überlagerten Bildes 10 nachfolgend das Gefährdungspotential, das unter Anderem von dem Radfahrer ausgeht.

In einem ersten Schritt wird die untere Kante 7 des Rahmens horizontal verlängert. Die Schnittpunkte Schnittpunkte 14, 15 der verlängerten Kante 16 mit dem Bewegungskorridor 11 werden bestimmt. Die Schnittpunkte 14, 15 geben an, wo das Objekt die Seitenränder 19 des Bewegungskorridors 11 übertreten wird. Nachfolgend wird der Schnittpunkt 15 als relevant erachtet, der in Bewegungsrichtung 8 des Objekts weiter von dem Objekt entfernt ist. In dem beispielhaften Bild 10 verläuft der horizontale Anteil derBewegung 8 von links nach rechts. Folglich ist der rechte Schnittpunkt 15 von Interesse.

Anschließend wird für das gesamte bewegte Objekt, z.B. dem Radfahrer, bestimmt, ob er den relevanten Schnittpunkt 15 bereits passiert hat. Diese Prüfung kann anhand eines ausgewählten Punktes, z.B. des Schwerpunktes, des Objekts erfolgen. Eine andere Variante sieht vor für jeden einzelnen Bildpunkt des Objekts zu prüfen, ob er links oder rechts des relevanten Schnittpunkts 15 liegt. Wird das Objekt als vollständig oder zumindest teilweise in seiner Bewegungsrichtung vor dem relevanten Schnittpunkt 15 erkannt, wird es als gefährdend eingestuft.

Ein der obig beschriebenen Prüfung gleichkommendes Verfahren besteht darin zu testen, ob sich das bewegte Objekt auf beide Schnittpunkte, also einschließlich dem relevanten Schnitpunkt, oder zumindest einem Schnittpunkt, der dann relevante Schnittpunkt ist, zubewegt. Entfernt sich das bewegte Objekt von beiden Schnittpunkten, hat das Objekt bereits beide und somit auch den relevanten Schnittpunkt passiert.

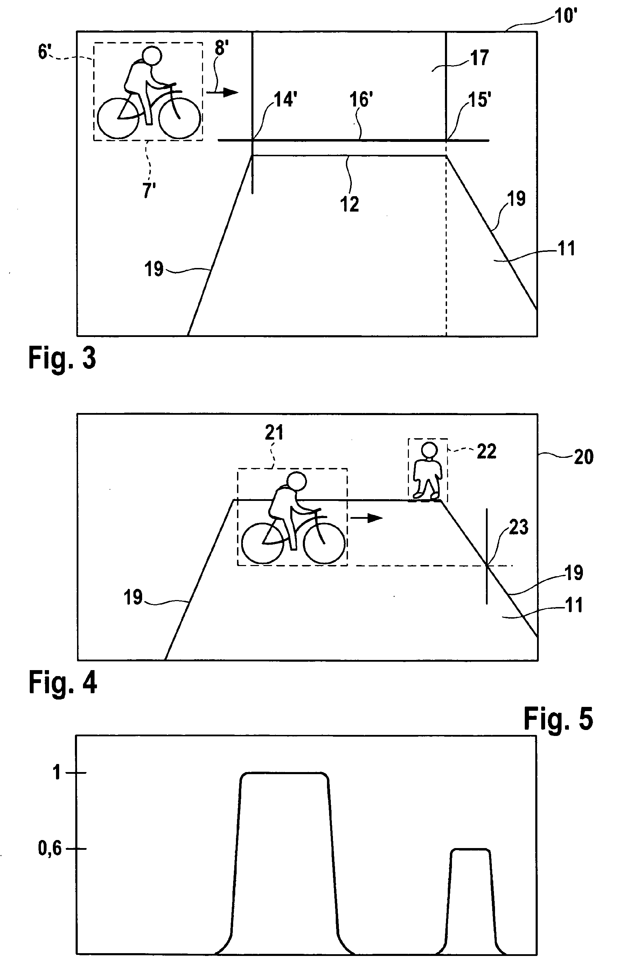

Eine gegebenenfalls zu berücksichtigende Situation und aufgenommenes Bild 10' ist in Figur 3 dargestellt. Die untere Kante 7' des Radfahrers 6' liegt oberhalb der oberen Kante 12 des überlagerten Bewegungskorridors 11. A priori ergeben sich somit keine Schnittpunkte mit der verlängerten Kante 16'. Das Verfahren kann dahingehend erweitert werden, dass an den Bewegungskorridor 11 eine Verlängerung 17 angehängt wird, die eine Breite entsprechend der oberen Kante 12 des ursprünglichen Korridors 11 aufweist. Die Schnittpunkte 14', 15' der verlängerten Kante 16' mit der Verlängerung 17 werden Schnittpunkten mit dem Bewegungskorridor 11 für das obig beschriebene Verfahren gleichgesetzt.

In den bisher beschriebenen Schritten wird alleinig festgehalten, dass ein bewegtes Objekt gefährdend sein könnte. Dies ist für einige Systeme zur weiteren Verarbeitung ausreichend. Vorteilhafterweise sollte zur Vermeidung einer Reizüberflutung eines Fahrers eine gestufte Gewichtung der Gefährdung vorgenommen werden oder ihm Hinweise gegeben werden, in welcher Richtung sich ein potentiell gefährdendes Objekt befindet.

In Figur 4 ist ein weiteres beispielhaftes Bild 20 dargestellt. In dem Bild sind zwei bewegte Objekte 21, 22 erkannt. Das erste Objekt 21, der Radfahrer, bewegt auf den ihm zugehörigen relevanten Schnittpunkt 23 mit dem Bewegungskorridor zu. Entsprechend wird dem Radfahrer ein Gefährdungspotential zugeordnet. Dabei erhält jeder einzelne Bildpunkt des Radfahrers einen Wert entsprechend dem Gefährdungspotential.

Anschließend erfolgt eine Summierung oder gewichtete Summierung über alle Punkte einer Spalte, d.h. Punkte einer vertikalen Linie des Bildes 20, zu einem Summationswert. Die Summationswerte für die einzelnen Spalten können dann über die horizontale Richtung aufgetragen wie in Figur 5 dargestellt aussehen. Die Ordinate gibt den Betrag der Summationswerte an.

Die Summation kann nach bekannter Arithmetik erfolgen. Der Summationswert kann aber gleichermaßen dem Maximalwert einer Spalte gleichgesetzt werden.

Dem Objekt 22, dem Fußgänger, ist ebenfalls ein Gefährdungspotential zugeordnet. Der Fußgänger ist in dem Bild 20 von geringerer vertikaler Abmessung. Typischerweise kann dies mit einer größeren Entfernung des Objekts zu dem Fahrzeug assoziiert werden. Daher werden in einer Ausgestaltung Objekten mit geringerer vertikaler Abmessung ein geringeres Gefährdungspotential zugeordnet.

Das zugeordnete Gefährdungspotential kann auch abhängig von der Entfernung des Objekts zu dem relevanten Rand getroffen werden. Vorzugsweise wird das Gefährdungspotential gering eingeschätzt, wenn sich das Objekt nahe dem relevanten Rand befindet. Ferner kann unterschieden werden, ob sich das Objekt noch auf beide Ränder zubewegt, also noch nicht in den Bewegungskorridor eingetreten ist, z.B. ein Fußgänger auf dem Bürgersteig vor dem Überqueren der Straße. In diesem Fall ist das Gefährdungspotential vorteilhafterweise als geringer einzustufen, als wenn sich das Objekt bereits in dem Bewegungskorridor befindet.

Das Gefährdungspotential eines Objekts, das den relevanten Rand überschritten hat, kann schrittweise mit zunehmender Entfernung von dem relevanten Rand auf Null abgesenkt werden. Eine falsche Einschätzung der Breite des Objekts kann somit bei der Gefährdungseinschätzung kompensiert werden.

Das Gefährdungspotential von sich selbst bewegenden Objekten ist höher einzustufen als von stehenden Objekten. Entsprechend kann eine Unterscheidung von Objekten mit Eigenbewegung und reiner Relativbewegung zu dem Fahrzeug 1 erfolgen und in die Festlegung des Gefährdungspotentials einfließen.

Der Bewegungszustand des Fahrzeuges 1 kann ebenfalls in die Beurteilung und Festsetzung des Gefährdungspotentials einfließen. Eine Variante sieht vor, das Gefährdungspotential auf Null oder andere geringe Werte abzusenken, wenn das Fahrzeug steht. An Kreuzungen würden sonst ununterbrochen Warnsignale potentiell gefährdender Objekte ausgegeben, obwohl der Fahrer keine Möglichkeit zu reagieren hat. Legt der Fahrer einen Gang ein, löst eine Bremse oder beginnt anzufahren, erfasst dies eine geeignete Einrichtung. Daraufhin wird das Gefährdungspotential der einzelnen bewegten Objekte wieder auf die ursprünglichen Werte gesetzt.

In einer typischen Verkehrsituation fahren dem Fahrzeug andere Fahrzeuge mit ähnlicher Geschwindigkeit voraus. Diese Fahrzeuge befinden sich in dem Bewegungskorridor und weisen immer wieder eine relative seitliche Bewegungskomponente auf. Dennoch werden diese vorausfahrenden Fahrzeuge als wenig gefährdend eingestuft. Die vorbeschriebene Ausführungsform kann dadurch erweitert werden, dass Objekte deren vertikale Position sich in dem Bild nicht ändert, d.h. Objekte, die nicht auf das Fahrzeug 1 zukommen, mit einem geringen Gefährdungspotential eingeschätzt werden. Bei Verwendung von Abstandradars können von diesen ermittelte Abstandswerte zum Erkennen im gleichen Abstand verbleibender Fahrzeuge verwendet werden. Objekte, die sich von dem Fahrzeug entfernen, ist ein sehr geringes Gefährdungspotential zuzuordnen. Ein Erkennen solcher Objekte erfolgt anhand des Abstandradars oder durch Erkennen von sich im Bild nach oben bewegender Objekte.

In der vorgehenden Beschreibung der Ausführungsformen sind andere Verkehrsteilnehmer als bewegte Objekte beschrieben. In gleicher Weise können als bewegte Objekte auch Seitenbegrenzungen oder dem durch Seitenbegrenzungen vorgegebenen Rand der Straße oder Spur erfasst werden. Bewegt sich das Fahrzeug quer oder teilweise quer zu einer Spur weisen z.B. die Mittelstreifen eine horizontale Bewegung in dem Bild auf und treten in den Bewegungskorridor ein und auch aus diesem aus. Ein Erfassungseinrichtung für solche Straßenmarkierungen kann mit dem vorbeschriebenen Verfahren kombiniert werden, indem die Straßenmarkierungen als bewegte Objekte identifiziert und verarbeitet werden. Eine Warnung oder ein Gefährdungspotential kann somit beim Überqueren des Mittelstreifens ausgegeben werden.

Eine Anzeigeneinrichtung für insbesondere die zeilenartige Summation der Gefährdungspotentiale (Fig. 5) kann durch eine farbkodierte Zeile im Sichtbereich des Fahrers bereitgestellt werden. Die entsprechenden Zellen der Zeile weisen den Fahrer auf die Richtung in der sich ein potentiell gefährdendes Objekt befindet hin und die Farbkodierung zeigt die Relevanz oder Gefährdungsstufe an.

## Patentansprüche

1. Verfahren zum Ermitteln potentiell gefährdender Objekte für ein Fahrzeug (1), mit den Schritten:
Erfassen einer Verkehrssituation in Fahrtrichtung (2) eines Fahrzeuges (1) in Form eines Bildes (10);
Erfassen mindestens eines bewegten Objektes (6) in dem Bild (10);
Bestimmen der Bewegungsrichtung (8) des mindestens einen Objekts (6) in dem Bild (10);
Schätzen eines zukünftigen Bewegungskorridors (11) des Fahrzeuges (1);
Überlagern des geschätzten Bewegungskorridors (11) und des Bildes (10);
Ermitteln des mindestens einen Objekts (6) als potentiell gefährdend, wenn das mindestens eine Objekt (6) entsprechend der bestimmten Bewegungsrichtung (8) sich auf einen oder beide Seitenränder (19) des Bewegungskorridors (11) zubewegend erfasst wird,
**dadurch gekennzeichnet, dass**
das Bild in vertikale Streifen unterteilt wird und
für jeden Streifen ein summiertes Gefährdungspotential durch Aufsummieren der Gefährdungswerte aller Objekte, die in dem Streifen zumindest teilweise enthalten sind, ermittelt wird.

2. Verfahren nach Anspruch 1, wobei
die Seitenränder des Bewegungskorridors basierend auf der Breite des Fahrzeuges geschätzt werden.

3. Verfahren nach Anspruch 1 oder 2, wobei
der Bewegungskorridor basierend auf der Geschwindigkeit des Fahrzeuges und/oder einer erfassten Lenkstellung geschätzt wird.

4. Verfahren nach einem der vorhergehenden Ansprüche, wobei
zu dem mindestens einen Objekt, das als potentiell gefährdend ermittelt wird, ein Gefährdungspotential zugeordnet wird.

5. Verfahren nach einem der vorhergehenden Ansprüche, wobei
die vertikale Abmessung des Objekts in dem Bild bestimmt wird und das Gefährdungspotential in Abhängigkeit der bestimmten vertikalen Abmessung erhöht wird.

6. Verfahren nach einem der vorhergehenden Ansprüche, wobei
die vertikale Position des Objekts in aufeinanderfolgenden Bildern bestimmt wird und das Gefährdungspotential des Objekts bei gleichbleibender vertikaler Position erniedrigt wird oder erniedrigt wird, wenn sich ein von dem unteren Rand des Bildes bemessener vertikaler Abstand zu der vertikalen Position vergrößert.

7. Verfahren nach einem der vorhergehenden Ansprüche, wobei
bestimmt wird, ob das in dem Bild bewegte Objekt eine Eigenbewegung oder ein in der Welt statisches Objekt ist, und das Gefährdungspotential für ein Objekt mit Eigenbewegung größer als für ein in der Welt statisches Objekt gewählt wird.

8. Verfahren nach einem der vorhergehenden Ansprüche, wobei
das summierte Gefährdungspotential jedes Streifens durch eine Signalisierungseinrichtung dem Fahrer des Fahrzeuges signalisiert wird.

9. Vorrichtung zum Ermitteln potentiell gefährdender Objekte für ein Fahrzeug, mit :
Bilderfassungseinrichtung (3) zum Erfassen einer Verkehrssituation in Fahrtrichtung eines Fahrzeuges in Form eines Bildes;
Bewegungsschätzungseinrichtung (5) zum Erfassen mindestens eines bewegten Objektes in dem Bild und zum Bestimmen der Bewegungsrichtung des mindestens einen Objekts in dem Bild;
Datenverarbeitungseinrichtung zum Schätzen eines zukünftigen Bewegungskorridors des Fahrzeuges und zum Überlagern des geschätzten Bewegungskorridors und des Bildes; Auswertungseinrichtung (13) zum Ermitteln des mindestens einen Objekts als potentiell gefährdend, wenn das mindestens eine Objekt entsprechend der bestimmten Bewegungsrichtung sich auf einen oder beide Seitenränder des Bewegungskorridors zubewegend erfasst wird,
**dadurch gekennzeichnet, dass**
die Auswerteeinrichtung (13) das Bild in vertikale Streifen unterteilt und
für jeden Streifen ein summiertes Gefährdungspotential durch Aufsummieren der Gefährdungswerte aller Objekte, die in dem Streifen zumindest teilweise enthalten sind, ermittelt.

10. Vorrichtung nach Anspruch 9, mit
einer Fahrerassistenzeinrichtung zum Hinweisen des Fahrers auf ermittelte potentiell gefährdende Objekte.

## Claims

1. Method for recognizing objects which are potentially dangerous for a vehicle (1), having the steps:
sensing a traffic situation in the direction of travel (2) of a vehicle (1) in the form of an image (10) ;
sensing at least one moving object (6) in the image (10) ;
determination of the direction of movement (8) of the at least one object (6) in the image (10) ;
estimation of a future movement corridor (11) of the vehicle (1) ;
superimposition of the estimated movement corridor (11) and of the image (10) ;
recognition of the at least one object (6) as potentially dangerous if, according to the specific direction of movement (8), the at least one object (6) is sensed as moving toward one or both side edges (19) of the movement corridor (11),
**characterized in that**
the image is divided into vertical strips and a summed danger potential is determined for each strip by summing the danger values of all the objects which are at least partially contained in the strip.

2. Method according to Claim 1, wherein
the side edges of the movement corridor are estimated on the basis of the width of the vehicle.

3. Method according to Claim 1 or 2, wherein
the movement corridor is estimated on the basis of the speed of the vehicle and/or a sensed steering position.

4. Method according to one of the preceding claims, wherein
a danger potential is assigned to the at least one object which is determined as being potentially dangerous.

5. Method according to one of the preceding claims, wherein
the vertical dimension of the object is determined in the image, and the danger potential is increased as a function of the specific vertical dimension.

6. Method according to one of the preceding claims, wherein
the vertical position of the object is determined in successive images and the danger potential of the object is reduced with the vertical position remaining the same, or is reduced if a vertical distance dimensioned from the lower edge of the image is increased with respect to the vertical position.

7. Method according to one of the preceding claims, wherein
it is determined whether the object which is moving in the image is an intrinsic movement or an object which is static in the world, and the danger potential for an object with intrinsic movement is selected to be greater than for an object which is static in the world.

8. Method according to one of the preceding claims, wherein
the summed danger potential of each strip is signalled to the driver of the vehicle by means of a signalling device.

9. Device for recognizing objects which are potentially dangerous for a vehicle, having:
an image capturing device (3) for sensing a traffic situation in the direction of travel of a vehicle in the form of an image;
movement-estimation device (5) for sensing at least one moving object in the image and for determining the direction of movement of the at least one object in the image;
data-processing device for estimating a future movement corridor of the vehicle and for superimposing the estimated movement corridor and the image;
evaluation device (13) for determining the at least one object as potentially dangerous if, depending on the specific direction of movement, the at least one object is sensed as moving toward one or both side edges of the movement corridor,
**characterized in that**
the evaluation device (13) divides the image into vertical strips and a summed danger potential is determined for each strip by summing the danger values of all the objects which are at least partially contained in the strip.

10. Device according to Claim 9, with a driver assistance device for indicating recognized potentially dangerous objects to the driver.

## Revendications

1. Procédé de détermination d'objets potentiellement dangereux pour un véhicule (1), le procédé présentant les étapes qui consistent à :
- détecter sous la forme d'une image (10) une situation de trafic dans la direction de déplacement (2) d'un véhicule (1),
- détecter au moins un objet (6) qui se déplace dans l'image (10),
- déterminer la direction de déplacement (8) du ou des objets (6) dans l'image (10),
- estimer un corridor futur de déplacement (11) du véhicule (1),
- superposer le corridor estimé de déplacement (11) et l'image (10),
- conclure que le ou les objets (6) sont potentiellement dangereux s'il est détecté que le ou les objets (6) se déplacent dans la direction de déplacement (8) définie sur un ou sur les deux bords latéraux (19) du corridor de déplacement (11),
**caractérisé en ce que**
l'image est divisée en bandes verticales et
**en ce que** pour chaque bande, un potentiel cumulé de risque est déterminé par addition des valeurs de risque de tous les objets contenus au moins en partie dans la bande.

2. Procédé selon la revendication 1, dans lequel les bords latéraux du corridor de déplacement sont estimés sur base de la largeur du véhicule.

3. Procédé selon les revendications 1 ou 2, dans lequel le corridor de déplacement est estimé sur base de la vitesse du véhicule et/ou d'un changement de direction détecté.

4. Procédé selon l'une des revendications précédentes, dans lequel un potentiel de risque est associé à l'objet ou aux objets dont il a été déterminé qu'ils sont potentiellement dangereux.

5. Procédé selon l'une des revendications précédentes, dans lequel la dimension verticale de l'objet dans l'image est déterminée et le potentiel de risque est augmenté en fonction de la dimension verticale ainsi définie.

6. Procédé selon l'une des revendications précédentes, dans lequel la position verticale de l'objet est déterminée dans des images successives, le potentiel de risque de l'objet étant diminué lorsque sa position verticale est constante ou lorsque la distance verticale, mesurée à partir du bord inférieur de l'image, par rapport à sa position verticale augmente.

7. Procédé selon l'une des revendications précédentes, qui détermine si l'objet mobile dans l'image est un objet qui a un déplacement propre ou un objet statique dans l'univers, le potentiel de risque sélectionné pour un objet à déplacement propre étant supérieur à celui d'un objet statique dans l'univers.

8. Procédé selon l'une des revendications précédentes, dans lequel le potentiel de risque cumulé de chaque bande est signalé au conducteur du véhicule par un dispositif de signalisation.

9. Dispositif de détermination du risque potentiel d'objets pour un véhicule, qui présente :
- un dispositif (3) de saisie d'image qui saisit sous la forme d'une image une situation de trafic dans la direction de déplacement d'un véhicule,
- un dispositif (5) d'estimation du déplacement qui détecte au moins un objet mobile dans l'image et qui détermine la direction de déplacement du ou des objets dans l'image,
- un dispositif de traitement de données qui estime un corridor futur de déplacement du véhicule et qui superpose le corridor estimé de déplacement et l'image,
- un dispositif d'évaluation (13) qui détermine si le ou les objets présentent un risque potentiel s'il est détecté que le ou les objets s'approchent d'un ou des deux bords latéraux du corridor de déplacement dans la direction de déplacement définie,
**caractérisé en ce que**
le dispositif d'évaluation (13) divise l'image en bandes verticales et détermine pour chaque bande un potentiel cumulé de risque en additionnant les valeurs de risque de tous les objets contenus au moins en partie dans la bande.

10. Dispositif selon la revendication 9, qui présente un dispositif d'assistance au conducteur qui indique au conducteur qu'il a déterminé la présence d'objets potentiellement dangereux.
